Europäisches Patentamt

European Patent Office

Office européen des brevets

(11) Veröffentlichungsnummer: **0 278 097 B1**

## EUROPÄISCHE PATENTSCHRIFT

(45) Veröffentlichungstag der Patentschrift: **13.03.91**

(51) Int. Cl.⁵: **D06F 75/28**

(21) Anmeldenummer: **87118737.3**

(22) Anmeldetag: **17.12.87**

(54) Schnurhalter für ein Bügeleisen.

(30) Priorität: **09.01.87 DE 8700394 U**

(43) Veröffentlichungstag der Anmeldung:
**17.08.88 Patentblatt 88/33**

(45) Bekanntmachung des Hinweises auf die
Patenterteilung:
**13.03.91 Patentblatt 91/11**

(84) Benannte Vertragsstaaten:
**AT BE DE FR IT LU NL**

(56) Entgegenhaltungen:
**BE-A- 539 060
DE-A- 2 752 575
DE-U- 8 329 821
FR-A- 2 482 987
US-A- 2 530 540**

(73) Patentinhaber: **Hailo-Werk Rudolf Loh GmbH & Co. KG
Industriestrasse
W-6342 Haiger(DE)**

(72) Erfinder: **Müller, Jürgen
Heidfeldstarsse 29
W-6344 Dietzhölztal-Ewersbach(DE)**
Erfinder: **Gross, Christian
Habachstrasse 6
W-5902 Netphen-Deuz(DE)**

(74) Vertreter: **Vogel, Georg
Pat.-Ing. Georg Vogel Hermann-
Essig-Strasse 35
W-7141 Schwieberdingen(DE)**

## Beschreibung

Die Erfindung betrifft einen Schnurhalter für ein Bügeleisen mit einem Stab, dessen eines Ende über ein Gelenk mit einem Führungselement für eine Schnur verbindbar ist, während das andere Ende des Stabes mittels einer Halterung mit einem Bügeltisch verbindbar ist.

In der BE-A 539 060 ist ein Schnurhalter mit einem Stab beschrieben, dessen oberes Ende eine um eine vertikale Achse verdrehbare Klemmhülse für das Kabel trägt. Trägt die Klemmhülse ein Bügeleisenkabel, dann ist nicht auszuschließen, daß das Kabel während den Hin- und Herbewegungen des Bügeleisen zum einen um den vertikalen Stab gewickelt und zum anderen im Bereich der Enden der Klemmhülse äußerst beansprucht wird, was zur Beschädigung des Kabels führen kann.

Ferner ist in der DE-GM 83 29 821 ein Schnurhalter beschrieben, bei dem das Kabel mit den Führungselementen ohne weiteres verbunden werden kann, so daß der federnd angeordnete Stab die Schnur des Bügeleisens von der Bügelplatte des auf dem Bügelbrett oder einer am Bügeltisch angebrachten Bügeleisenablage abgestellten Bügeleisen fernhält. Hierbei ist das Führungselement vorzugsweise zum Benutzer, d. h. quer zum Bügelbrett, ausgerichtet, so daß es zu keiner ungewollten Berührung des Kabels mit dem Stab kommen kann. Soll dieser z.B. für Rechtshänder ausgebildete Schnurhalter von einem Linkshänder benutzt werden, dann ist das Haltemaul des Führungselementes und somit auch die vom Haltemaul gehaltene Schnur vom Benutzer weiter weg enfernt, was die Handhabung mit dem Bügeleisen erschwert.

Es ist Aufgabe der Erfindung, einen Schnurhalter der eingangs genannten Art ohne unangemessenen konstruktiven Aufwand so weiterzubilden, daß er ordnungsgemäß und ohne Beschädigung des Kabels von einem Rechtshänder genauso gut benutzt werden kann, wie von einem Linkshänder.

Die gestellte Aufgabe wird erfindungsgemäß dadurch gelöst, daß das als Arm ausgebildete Führungselement eine Führungsöse und ein Haltemaul besitzt und um eine horizontal verlaufende Achse verschwenkbar ist und daß das Gelenk einen Rastkörper besitzt, der in den beiden Verschwenkstellungen des Armes wirksam ist.

Auf diese Weise ist sichergestellt, daß das Haltemaul des Führungselementes ständig zum Benutzer hin ausgerichtet ist, so daß der Abstand der vom Führungselement getragenen Schnur vom Benutzer optimal gehalten werden kann. Die Besonderheit der Erfindung besteht insbesondere darin, daß das Umrüsten des Schnurhalters mit einem einzigen Handgriff erfolgen kann, indem das Führungselement von seiner ersten in seine zweite Arbeitslage verschwenkt wird.

Weitere vorteilhafte und zweckmäßige Maßnahmen der Erfindung gehen aus den Unteransprüchen hervor.

Bezüglich der Herstellung des Schnurhalters ist es zweckmäßig, wenn das Gelenk das eine Ende des Armes bildet und aus zwei gegeneinander verdrehbaren Teilen besteht. Hierbei ist es zweckmäßig, wenn die Teile etwa scheibenförmig ausgebildet sind. Diese Ausgestaltung der Erfindung macht es möglich, die regelmäßig aus verschiedenen Werkstoffen (das Führungselement besteht regelmäßig aus Kunststoff, während der Stab aus einem elastischen Draht bestehen kann) bestehenden Teile nachträglich einfach zu verbinden. Eine besonders einfache Herstellung des Führungselementes ist dann möglich, wenn das eine Teil eine koaxiale Bohrung besitzt, in der ein Zapfen des anderen Teiles drehbar gelagert ist. Der Zapfen kann hierbei die Form eines Hohlzylinders aufweisen, an dessen freiem Ende ein Flansch bzw. ein Bund mit einem Außendurchmesser angeformt ist, der größer ist, als der Innendurchmesser der Bohrung, und mindestens einen axialen Schlitz besitzt. Man erkennt, daß bei dieser Ausführungsform des Führungselementes die Verbindung zwischen seinen beiden Teilen besonders schnell und einfach herstellbar ist.

Ist hierbei die axiale Länge des Zapfens so bemessen, daß der Bund bzw. der Flansch im zusammengebauten Zustand des Führungselementes auf der anderen Seite des einen Teiles angeordnet ist, dann ist der Zusammenbau des Führungselementes, der das Gelenk aufweist, besonders schnell möglich.

Bezüglich einer ordnungsgemäßen Rastverbindung sieht eine weitere Maßnahme der Erfindung vor, daß der Rastkörper aus einem axial verlaufenden Vorsprung, der an einem Teil geformt und in einer kreisbogenförmigen Nut des anderen Teiles führbar ist, besteht. Besitzen die beiden Nut-Enden Vertiefungen, derart, daß die tatsächliche Tiefe der Nut in diesen Bereichen mindestens so groß ist, wie die axiale Länge des Vorsprunges, dann kann auf einfache Weise verhindert werden, daß das Führungselement seine eine oder andere Raststellung verläßt. Hierbei ist es zweckmäßig, wenn die Vertiefungen mit dem Ende des Vorsprunges formschlüssig verbinbar sind.

Eine gute Verbindung zwischen dem Stab und dem Führungselement ist dann herstellbar, wenn zwischen der Bohrung und der Nut eine Aufnahmenut für das Stabende ausgebildet ist. Hierbei können diese Maßnahmen auch so getroffen sein, daß die Aufnahmenut fragezeichenförmig ausgebildet ist, wobei das eine Ende der Aufnahmenut mit Bezug auf die Teile radial verläuft.

Ein Ausführungsbeispiel der Erfindung ist in der Zeichnung dargestellt und wird im folgenden näher erläutert. Es zeigen

Fig. 1 einen Schnurhalter mit Steckdose, die mit einem Bügeltisch lösbar verbindbar ist,

Fig. 2 einen Teil eines Führungselementes des in Fig. 1 dargestellten Schnurhalters in Vorderansicht,

Fig. 3 einen Schnitt entlang der Linie III-III nach Fig. 2,

Fig. 4 das in Fig. 2 dargestellte Teil in Rückansicht,

Fig. 5 eine Ansicht des Teiles in Richtung des Pfeiles V nach Fig. 4,

Fig. 6 einen Schnitt entlang der Linie VI-VI nach Fig. 4,

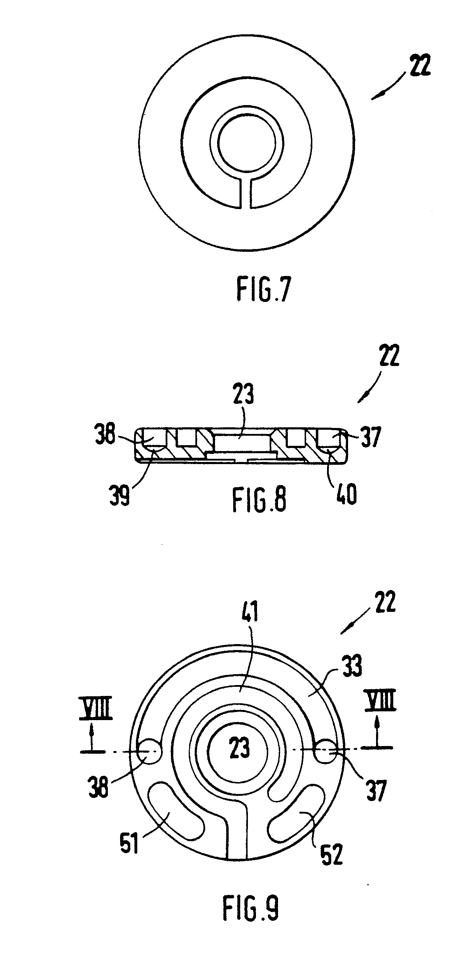

Fig. 7 die Außenseite des anderen Teiles des in Fig. 1 dargestellten Führungselementes,

Fig. 8 einen Schnitt durch das andere Teil entlang der Line VIII-VIII nach Fig. 9 und

Fig. 9 die Innenseite des in Fig. 7 dargestellten Teiles.

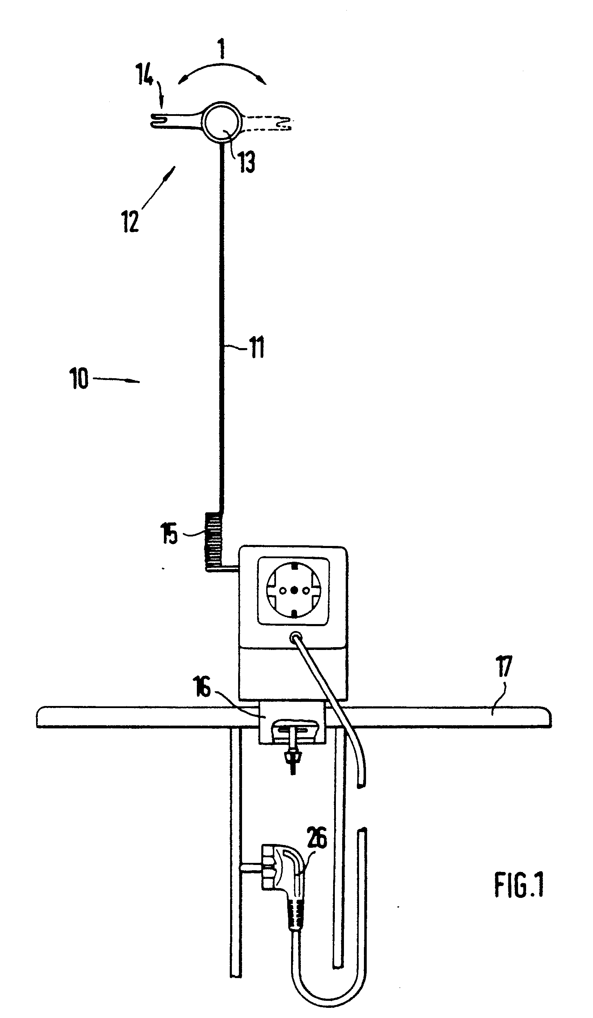

Die Fig. 1 läßt erkennen, daß der Schnurhalter 10 für ein Bügeleisen einen Stab 11 besitzt, dessen ein Ende ein Führungselement 12 mit einer Führungsöse und einem Haltemaul 14 für die Schnur besitzt. Das andere Ende des Stabes besitzt vorzugsweise eine Schraubenfeder 15, die mittels einer Halterung 16 mit dem Bügeltisch 17 verbindbar ist. Das als Arm ausgebildete Führungselement 12 ist mit dem Stab 11 mittels eines Gelenkes verbunden, derart, daß der Arm 19 vorzugsweise um 180° verschwenkbar ist. Das Gelenk bildet das eine Ende des Armes 19 und besteht aus zwei gegeneinander verdrehbaren Teilen 21,22. Das eine Teil 22 besitzt eine koaxiale Bohrung 23, in der ein Zapfen 24 des anderen Teiles 21 drehbar gelagert ist. Der Zapfen 24 weist die Form eines Hohlzylinders auf, an dessen freiem Ende ein Flansch 25 mit einem Außendurchmesser angeformt ist, der größer ist als der Innendurchmesser der Bohrung 23. Der Flansch 25 besitzt vier axiale Schlitze 27 bis 30. Die axiale Länge des Zapfens 24 bis zum Flansch 25 entspricht etwa der axialen Länge der Bohrung 23. Das Teil 21 besitzt einen Rastkörper, der in den beiden Verschwenkstellungen des Armes 19 wirksam ist. Der Rastkörper besteht aus einem axial verlaufenden Vorsprung 31, der an einem Teil 21 angeformt ist und in einer kreisbogenförmigen Nut 33 des anderen Teiles 22 führbar ist. Der Vorsprung 31 besitzt einen kreisrunden Querschnitt. Die beiden Nutenden 37,38 besitzen Vertiefungen 34,40. Die tatsächliche Tiefe der Nut 33 in diesen Bereichen ist mindestens so groß, wie die Axiallänge des Vorsprunges 31. Im vorliegenden Ausführungsbeispiel entspricht diese Tiefe der axialen Länge des Vorsprunges 31, so daß eine formschlüssige Verbindung zwischen dem Vorsprung 31 und den Nutenden 37,38 möglich ist.

Zwischen der Bohrung 23 und der Nut 33 ist eine Aufnahmenut 41 für das Ende des Stabes 11 ausgebildet. Die Aufnahmenut 41 ist fragezeichenförmig ausgebildet, wobei das eine Ende der Aufnahmenut mit Bezug auf das Teil 22 radial verläuft. Das Teil 22 besitzt ferner zwei Ausnehmungen 51,52.

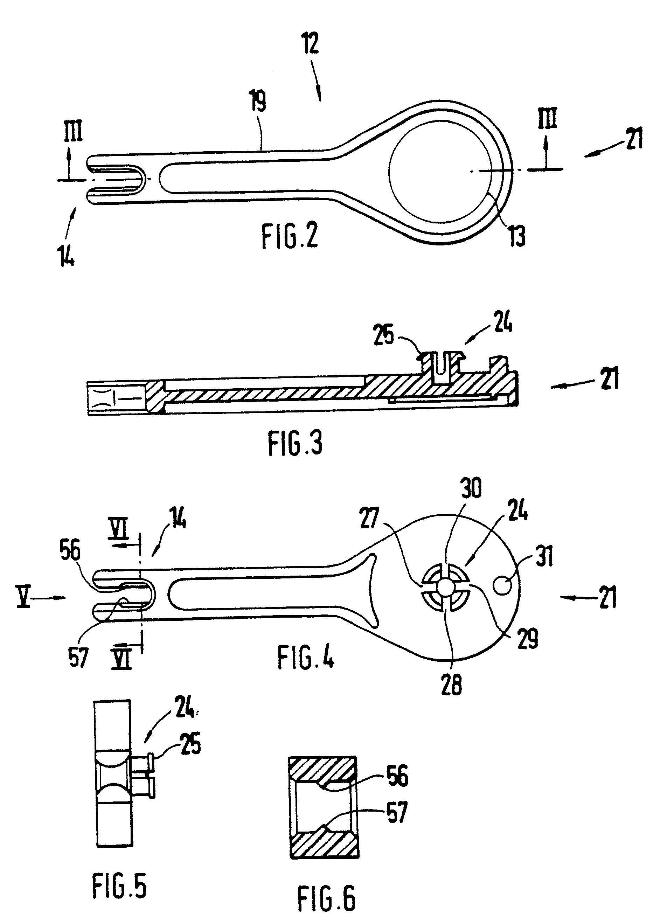

Wie die Fig. 1 zeigt ist das Führungselement 12 in Richtung des Doppelpfeiles 1 verschwenkbar, während aus der Fig. 6 und der linken Seite der Fig. 4 hervorgeht, daß das Haltemaul 14 zwei sich verjüngende Vorsprünge 56 und 57 besitzt, zwischen die das Kabel eingeklemmt werden kann.

## Ansprüche

1. Schnurhalter für ein Bügeleisen mit einem Stab, dessen eines Ende über ein Gelenk mit einem Führungselement für eine Schnur verbindbar ist, während das andere Ende des Stabes mittels einer Halterung mit einem Bügeltisch verbindbar ist,
   dadurch gekennzeichnet,
   daß das als Arm ausgebildete Führungselement (12) eine Führungsöse und ein Haltemaul (14) besitzt und um eine horizontal verlaufende Achse verschwenkbar ist und
   daß das Gelenk einen Rastkörper besitzt, der in den beiden Verschwenkstellungen des Armes (19) wirksam ist.

2. Schnurhalter nach Anspruche 1,
   dadurch gekennzeichnet,
   daß das Gelenk (20) das eine Ende des Armes bildet und aus zwei gegeneinander verdrehbaren Teilen (21,22) besteht.

3. Schnurhalter nach Anspruch 1 oder 2,
   dadurch gekennzeichnet,
   daß das eine Teil (22) eine koaxiale Bohrung (23) besitzt, in der ein Zapfen (24) des anderen Teiles (21) drehbar gelagert ist.

4. Schnurhalter nach einem der Ansprüche 1 bis 3,
   dadurch gekennzeichnet,
   daß der Zapfen (24) mindestens einen axialen Schlitz (27-30) besitzt und die Form eines Hohlzylinders aufweist, an dessen freiem Ende ein Flansch (25) bzw. Bund mit einem Außendurchmesser angeformt ist, der größer ist als der Durchmesser der Bohrung (23).

5. Schnurhalter nach einem der Ansprüche 1 bis 4,
   dadurch gekennzeichnet,

daß der Zapfen (24) vier symmetrisch ausgebildete Schlitze (27-30) aufweist.

6. Schnurhalter nach einem der Ansprüche 1 bis 5,
dadurch gekennzeichnet,
daß die axiale Länge des Zapfens (24) bis zum Flansch (25) bzw. Bund hin etwa der axialen Länge der Bohrung (23) entspricht.

7. Schnurhalter nach einem der Ansprüche 1 bis 6,
dadurch gekennzeichnet,
daß der Vorsprung (31) einen kreisrunden Querschnitt besitzt.

8. Schnurhalter nach einem der Ansprüche 1 bis 7,
dadurch gekennzeichnet,
daß der Rastkörper aus einem koaxial verlaufenden Vorsprung (31), der an einem Teil (21) angeformt und in einer kreisbogenförmigen Nut (33) des anderen Teiles (22) führbar ist, besteht.

9. Schnurhalter nach einem der Ansprüche 1 bis 8,
dadurch gekennzeichnet,
daß die beiden Nut-Enden (37,38) Vertiefungen (39,40) besitzen, derart, daß die tatsächliche Tiefe der Nut (33) in diesen Bereichen mindestens so groß ist wie die axiale Länge des Vorsprunges (31).

10. Schnurhalter nach einem der Ansprüche 1 bis 9,
dadurch gekennzeichnet,
daß die Vertiefungen mit dem Ende des Vorsprunges (31) formschlüssig verbindbar sind.

11. Schnurhalter nach einem der Ansprüche 1 bis 10,
dadurch gekennzeichnet,
daß zwischen der Bohrung (23) und der Nut eine Aufnahmenut (41) für das Ende des Stabes (11) ausgebildet ist.

12. Schnurhalter nach einem der Ansprüche 1 bis 11,
dadurch gekennzeichnet,
daß die Aufnahmenut (41) fragezeichenförmig ausgebildet ist, wobei das eine Ende der Aufnahmenut (41) mit Bezug auf die Teile (22) radial verläuft.

## Claims

1. Holder for the electric flex of an iron, with a rod, the one end of which can be connected by means of a hinge joint with a guide element for a flex, while the other end of the rod can be connected to an ironing table by means of a grip,
characterized thereby,
that the guide element (12) which is formed as an arm has a guide eyelet and a fixing jaw (14) and can be swung about a horizontal axis and that the hinge joint possesses a snap-in locking device which is effective in both swing positions of the arm (19).

2. Holder for an electric flex according to claim 1,
characterized thereby,
that the hinge joint (20) forms one end of the arm and consists of two counter rotatable parts (21, 22).

3. Holder for an electric flex according to claim 1 or 2,
characterized thereby,
that one part (22) has a coaxial drill hole (23), in which a spigot (24) of the other part (21) sits forming a rotatable bearing.

4. Holder for an electric flex according to one of the claims 1 to 3,
characterized thereby,
that the spigot (24) possesses at least one axial slit (27-30) and has the form of a hollow cylinder, at the free end of which a flange (25) or collar is formed with an outside diameter which is greater than the diameter of the drill hole (23).

5. Holder for an electric flex according to one of the claims 1 to 4,
characterized thereby,
that the spigot (24) possesses four symmetrically formed slits (27-30).

6. Holder for an electric flex according to one of the claims 1 to 5,
characterized thereby,
that the axial length of the spigot (24) up to the flange (25) or collar corresponds approximately to the axial length of the drill hole (23).

7. Holder for an electric flex according to one of the claims 1 to 6,
characterized thereby,
that the hinge joint possesses a snap-in locking device which is effective in both swing positions of the arm (19).

8. Holder for an electric flex according to one of the claims 1 to 7,
characterized thereby,
that the snap-in locking device consists of a coaxially formed projection (31), which is formed onto one part (21) and slides in an arc-shaped groove (33) on the other part (22).

9. Holder for an electric flex according to one of the claims 1 to 8,
characterized thereby,
that the two ends (37, 38) of the grooves have indentations (39, 40), such that the actual depth of the groove (33) in these regions is at least as large as the axial length of the projection (31).

10. Holder for an electric flex according to one of the claims I to 9,
characterized thereby,
that the indentations can be interlocked with the end of the projection (31).

11. Holder for an electric flex according to one of the claims 1 to 10,
characterized thereby,
that between the drill hole (23) and the groove a containing groove (41) is formed to take the end of the rod (11).

12. Holder for an electric flex according to one of the claims 1 to 11,
characterized thereby,
that the location groove (41) is formed like a question mark, whereby the one end of the location groove (41) runs radially with respect to the parts (22).


**Revendications**

1. Support pour le cordon d'alimentation d'un fer à repasser muni d'une baguette dont l'une extrémité peut être raccordé à un élément de guidage d'un cordon par intermédiaire d'une articulation, tandis que l'autre extrémité de la baguette peut être lier à une table à repasser au moyen d'un dispositif de fixation,
caractérisé par le fait
que l'élément de guidage en forme de bras (12) est muni d'un oeillet et d'une geule (14) et pivotable autour d'une axe horizontale et que l'articulation est munie d'un corps de crantage agissant dans les deux positions de pivotage du bras (19).

2. Support pour le cordon d'alimentation selon la revendication 1,
caractérisé par le fait,

que l'articulation (20) forme l'une extrémité du bras comprenant deux pièces (21,22) pivotables l'une par rapport à l'autre.

3. Support pour le cordon d'alimentation selon la revendication 1 ou 2,
caractérisé par le fait,
que l'une pièce (22) est munie d'un trou coaxial (23) dans lequel est logé un pivot (24) de l'autre pièce (21).

4. Support pour le cordon d'alimentation selon une des revendications de 1 à 3,
caractérisé par le fait,
que le pivot (24) est muni d'une rainure axiale au minimum (27-30) et est d'une forme d'un cylindre creux, sur l'extrémité libre duquel est situé un collet (25) ou un épaulement ayant un diamètre supérieure à celui du trou (23).

5. Support pour le cordon d'alimentation selon une des revendications de 1 à 4,
caractérisé par le fait,
que le pivot (24) a quatre rainures symétriques (27-30).

6. Support pour le cordon d'alimentation selon une des revendications de 1 à 5, 'caractérisé par le fait, que la longueur axiale du pivot (24) allant jusqu'au collet (25) ou à l'épaulement correspond à peu près à la longueur axiale du trou (23).

7. Support pour le cordon d'alimentation selon une des revendications de 1 à 6,
caractérisé par le fait,
que l'articulation a un corps de crantage agissant dans les deux positions de pivotage du bras (19).

8. Support pour le cordon d'alimentation selon une des revendications de 1 à 7,
caractérisé par le fait,
que le corps de crantage comprend une saillie (31) se trouvant sur une pièce (21) et guidée dans une rainure en forme d'arc (33) de l'autre pièce (22).

9. Support pour le cordon d'alimentation selon les revendications de 1 à 8,
caractérisé par le fait,
que dans les deux extrémités de la rainure (37,38) sont prévus des creux (39,40) de façon à ce que la profondeur effective de la rainure (33) correspond dans ces zones à la longueur axiale de la saillie (31) au minimum.

10. Support pour le cordon d'alimentation selon une des revendications de 1 à 9,
caractérisé par le fait,
que les creux peuvent être engagés positivement à l'extrémité de la saillie (31).

11. Support pour le cordon d'alimentation selon une des revendications de 1 à 10, caractérisé par le fait, qu'entre le trou (23) et la rainure est prévue une rainure de logement (41) de l'extrémité de la baguette (11).

12. Support pour le cordon d'alimentation selon une des revendications de 1 à 11, caractérisé par le fait, que la rainure de logement (41) est formée en point d'interrogation avec une extrémité de la rainure de logement (41) ayant une allure radiale par rapport aux pièces (22).

FIG.1

FIG.2

FIG.3

FIG.4

FIG.5

FIG.6

EP 0 278 097 B1

FIG.7

FIG.8

FIG.9